(19) **Europäisches Patentamt / European Patent Office / Office européen des brevets**

(11) **EP 3 199 846 B1**

(12) **EUROPEAN PATENT SPECIFICATION**

(45) Date of publication and mention
of the grant of the patent:
**15.05.2019 Bulletin 2019/20**

(51) Int Cl.:
*F16J 15/34* (2006.01)    *F04D 29/12* (2006.01)
*F16J 15/38* (2006.01)

(21) Application number: **15843801.0**

(22) Date of filing: **26.08.2015**

(86) International application number:
**PCT/JP2015/074058**

(87) International publication number:
**WO 2016/047352 (31.03.2016 Gazette 2016/13)**

(54) **MECHANICAL SEAL**

MECHANISCHE DICHTUNG

JOINT D'ÉTANCHÉITÉ MÉCANIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2014 JP 2014193867**

(43) Date of publication of application:
**02.08.2017 Bulletin 2017/31**

(73) Proprietor: **Eagle Industry Co., Ltd.**
**Minato-ku**
**Tokyo 105-8587 (JP)**

(72) Inventors:
• **ITADANI Masatoshi**
**Tokyo 105-8587 (JP)**
• **SUNAGAWA Kazumasa**
**Tokyo 105-8587 (JP)**

• **CHIBA Keiichi**
**Tokyo 105-8587 (JP)**
• **KIRYU Kenji**
**Tokyo 105-8587 (JP)**
• **YOSHINO Akira**
**Tokyo 105-8587 (JP)**
• **SHINOMIYA Takashi**
**Tokyo 105-8587 (JP)**

(74) Representative: **TBK**
**Bavariaring 4-6**
**80336 München (DE)**

(56) References cited:
**WO-A1-2010/004809**    **DE-A1-102011 005 108**
**JP-A- H0 611 045**    **JP-A- H1 150 995**
**US-A- 4 779 876**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to mechanical seals according to the preamble of claim 1, 2 or 3 used, for example, as shaft seal devices in pumps and others.

Background Art

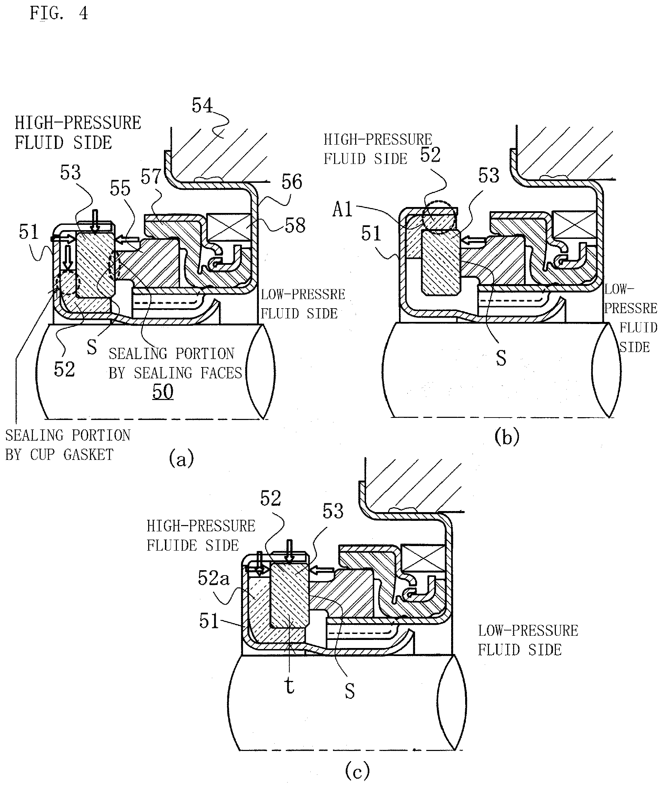

As a type of mechanical seal, as shown in Fig. 4(a), an inside mechanical seal in the form of sealing a sealed fluid on the high-pressure fluid side tending to leak from the outer periphery of sealing faces toward the inner periphery, in which a rotating-side seal ring 53 in an annular shape provided at a rotating shaft 50 that drives a pump impeller (not shown) on the high-pressure fluid side, via a sleeve 51 and a cup gasket 52, rotatably with the rotating shaft 50 in an integrated manner, and a stationary-side seal ring 55 in an annular shape provided at a housing 54 of a pump via a bellows 57 in a cartridge 56, non-rotatably and axially movably, slide in close contact with each other on sealing faces S mirror-finished by lapping or the like, by a coiled wave spring 58 and the bellows 57 axially biasing the stationary-side seal ring 55 has been known (Hereinafter, referred to as "Conventional Art 1." See Patent Document 1, for example). The cup gasket 52 in the mechanical seal in Conventional Art 1 is formed with an elastic material such as rubber, and has a cross-sectional shape of a substantially L shape.

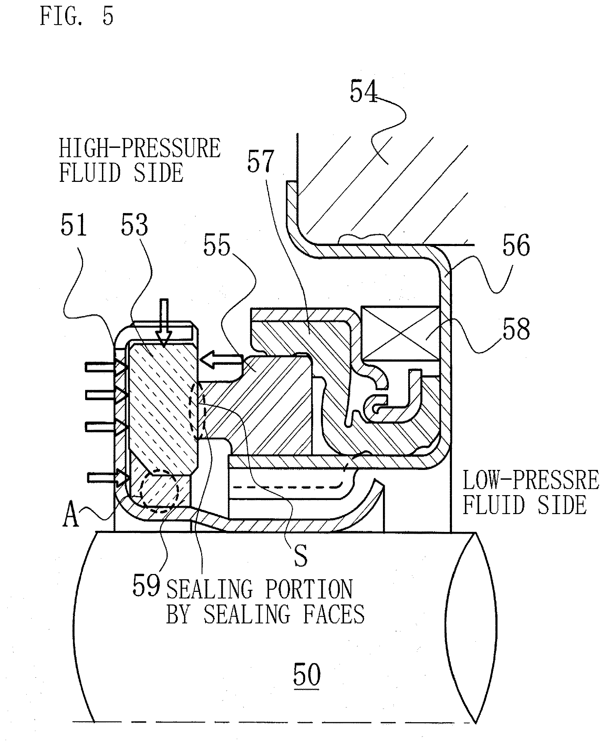

Another one with a basic seal structure identical to that in Conventional Art 1 shown in Fig. 4(a), in which, however, as shown in Fig. 5, a cup gasket 59 fitted between a sleeve 51 and a rotating-side seal ring 53 has a substantially I shape in cross section, not extending over a back surface of the rotating-side seal ring 53 and a radial portion of the sleeve 51 has been known (Hereinafter, referred to as "Conventional Art 2." See Patent Documents 2 and 3, for example). Patent Document 2 shows a generic mechanical seal according to the preamble of claim 1 or 3. Patent document 4 shows a generic inside mechanical seal according to the preamble of claim 2.

However, in recent years, ones under more strict conditions of fluids used than conventional ones have been demanded. For example, for water pumps for cooling automobile engines, ones for fluids whose temperature is high and fluids whose pressure is high are being demanded for fuel saving. In this situation, in the structure of Conventional Art 1, since, due to the presence of a high-pressure fluid on the outer peripheral side of sealing faces, a radial pressure acts on a surface of the cup gasket 52 on the high-pressure fluid side from the outer peripheral side as shown by an arrow, and the cup gasket 52 is formed with an elastic material such as rubber and has a uniform thickness, there is a problem that the entire cup gasket 52 gradually comes out to the low-pressure fluid side (atmosphere side). Once the cup gasket 52 starts to come out to the low-pressure fluid side, a back pressure acting on the back surface of the rotating-side seal ring 53 increases, reducing a pinching force on the cup gasket 52. Thus, the coming out of the cup gasket 52 is spurred, not resulting in a situation where the coming out is stopped halfway.

As a first measure against this problem, as shown in Fig. 4(b), there is a technique to reduce the effect of a radial pressure by fitting a cup gasket 52 on the high-pressure fluid side (outer peripheral side) of a rotating-side seal ring 53 for sealing with an axial sealing portion A1, which, however, causes a problem of decreasing the heat-dispersing property against sliding-generated heat at sealing faces S.

As a second measure, as shown in Fig. 4(c), it can be considered to set the thickness of a radial portion 52a of a cup gasket 52 larger than a gap t for an axial sealing portion between a sleeve 51 and a rotating-side seal ring 53 so that when a radial pressure acts on the cup gasket 52 from the outer peripheral side as shown by an arrow, it is prevented from coming out by the radial portion 52a being caught in the gap t, which, however, causes a problem of increasing the axial dimension of the rotating-side seal ring 53 itself.

In conventional Art 2 shown in Fig. 5, since a sealing portion A by the cup gasket 59 is located at axial portions of the sleeve 51 and the cup gasket 59, an axial force from the high-pressure fluid side toward the low-pressure fluid side (atmosphere side) acts on the cup gasket 59 as shown by an arrow, and a back pressure acting on the back surface of the rotating-side seal ring 53 increases, reducing a pinching force on the cup gasket 59. This causes the cup gasket 59 to come out to the low-pressure fluid side or causes only the rotating-side seal ring 53 and the cup gasket 59 to move to a stationary-side seal ring 55, destabilizing sliding on sealing faces S, and resulting in a problem of causing fluid leaks.

CITATION LIST

PATENT DOCUMENT

Patent Document 1: JP 2000 074226 A
Patent Document 2: JP 2012 184843 A (DE 10 2011 005108 A1)
Patent Document 3: JP H06 11047 A
Patent Document 4: US 4 779 876 A

SUMMARY OF THE INVENTION

Problem to be Solved by the Invention

The present invention has been made to solve the problems of the conventional arts, and has an object of providing a mechanical seal in which a cup gasket fitted between a sleeve at a rotating shaft and a rotating-side seal ring is prevented from coming out to the low-pressure fluid side without reducing a heat-dispersing property against sliding-generated heat and without enlarging an axial dimension.

Means for Solving Problem

The object is achieved by the mechanical seal having the features of claim 1, 2 or 3.

To attain the above object, a mechanical seal, an inside mechanical seal, according to the present invention includes a sleeve fixed to a rotating shaft, a cartridge fixed to a housing, a rotating-side seal ring provided at the sleeve via a cup gasket, and a stationary-side seal ring provided at the cartridge, the stationary-side seal ring sliding, facing the rotating-side seal ring, in which a high-pressure fluid is present on an outside-diameter side of sealing faces of the rotating-side seal ring and the stationary-side seal ring, the rotating-side seal ring is formed in a substantially pentagonal shape in cross section having a cut portion at which a corner portion on an inside-diameter side and a back-surface side is cut in a tapered shape, the cup gasket is fitted over the inside-diameter side and the back-surface side of the rotating-side seal ring, is formed in a substantially L shape in cross section including an axial portion in contact with the inside-diameter side of the rotating-side seal ring and an inner cylindrical portion of the sleeve and a radial portion in contact with the back-surface side of the rotating-side seal ring and a radial portion of the sleeve, and has a corner portion facing the cut portion formed in a shape along the cut portion, and the corner portion of the cup gasket has a thickness t set larger than a gap d between the inside-diameter side of the rotating-side seal ring and the inner cylindrical portion of the sleeve.

According to the invention, the cup gasket can be prevented from coming out to the low-pressure fluid side without reducing the heat-dispersing property against sliding-generated heat compared to a case where the cup gasket is provided on the high-pressure fluid side of the rotating-side seal ring, and without enlarging the axial dimension compared to a case where the thickness of the radial portion of the cup gasket is set larger.

Further, the rotating-side seal ring can be reduced in weight without affecting the sealing performance since the rotating-side seal ring is formed in the pentagonal shape in cross section having the cut portion at which the corner portion on the inside-diameter side and the back-surface side is cut in the tapered shape.

Further, an axial force in a direction opposite to the sealing face of the rotating-side seal ring can be kept at a constant magnitude, and the radial portion of the cup gasket can be securely pinched, contributing to the prevention of coming out of the cup gasket to the low-pressure fluid side, since the cup gasket is formed in the substantially L shape in cross section including the axial portion and the radial portion.

Further, the cup gasket can be prevented physically from coming out to the low-pressure fluid side since the thickness of the corner portion of the cup gasket is set larger than the gap between the inside-diameter side of the rotating-side seal ring and the inner cylindrical portion of the sleeve.

Further, even when the axial portion of the cup gasket is accidentally broken, the sealing property can be maintained since the cup gasket is prevented from coming out to the low-pressure fluid side.

A mechanical seal, an inside mechanical seal, according to the present invention includes a sleeve fixed to a rotating shaft, a cartridge fixed to a housing, a rotating-side seal ring provided at the sleeve via a cup gasket, and a stationary-side seal ring provided at the cartridge, the stationary-side seal ring sliding, facing the rotating-side seal ring, in which a high-pressure fluid is present on an outside-diameter side of sealing faces of the rotating-side seal ring and the stationary-side seal ring, the rotating-side seal ring is formed in a substantially hexagonal shape in cross section having a cut portion at which a corner portion on an inside-diameter side and a back-surface side is cut in an inward-recessed shape, the cup gasket is fitted over the inside-diameter side and the back-surface side of the rotating-side seal ring, is formed in a substantially L shape in cross section including an axial portion in contact with the inside-diameter side of the rotating-side seal ring and an inner cylindrical portion of the sleeve and a radial portion in contact with the back-surface side of the rotating-side seal ring and a radial portion of the sleeve, and has a corner portion facing the cut portion formed in a shape along the cut portion, and the corner portion of the cup gasket has a thickness t set larger than a gap d between the inside-diameter side of the rotating-side seal ring and the inner cylindrical portion of the sleeve.

According to the invention, in addition to the effects as set out above, the cup gasket can be further prevented from coming out to the low-pressure fluid side since there is an advantage that the largest thickness of the corner portion of the cup gasket is easily increased.

A mechanical seal, an outside mechanical seal, according to the present invention includes a sleeve fixed to a rotating shaft, a cartridge fixed to a housing, a rotating-side seal ring provided at the sleeve via a cup gasket, and a stationary-side seal ring provided at the cartridge, the stationary-side seal ring sliding, facing the rotating-side seal ring, in which a high-pressure sealed fluid is present on an inside-diameter side of sealing faces of the rotating-side seal ring and the stationary-side seal ring, the rotating-side seal ring is formed in a pentagonal shape in cross section having a cut portion at which a corner portion on an outside-diameter side and a back-surface side is cut in a tapered shape, or in a substantially hexagonal shape in cross section having a cut portion at which the corner

portion is cut in an inward-recessed shape, the cup gasket is fitted over the back-surface side of the rotating-side seal ring and an outer cylindrical portion of the sleeve, is formed in a substantially L shape in cross section including an axial portion in contact with the outside-diameter side of the rotating-side seal ring and the outer cylindrical portion of the sleeve and a radial portion in contact with the back-surface side of the rotating-side seal ring and a radial portion of the sleeve, and has a corner portion facing the cut portion formed in a shape along the cut portion, and the corner portion of the cup gasket has a thickness t set larger than a gap d between the back-surface side of the rotating-side seal ring and the radial portion of the sleeve.

According to the invention, an outside mechanical seal with the effects as set our above can be provided.

Effect of the Invention

The present invention achieves the following outstanding effects:

(1) The cup gasket can be prevented from coming out to the low-pressure fluid side without reducing the heat-dispersing property against sliding-generated heat compared to a case where the cup gasket is provided on the high-pressure fluid side of the rotating-side seal ring, and without enlarging the axial dimension compared to a case where the thickness of the radial portion of the cup gasket is set larger.

(2) The rotating-side seal ring can be reduced in weight without affecting the sealing performance since the rotating-side seal ring is formed in the pentagonal shape in cross section having the cut portion at which the corner portion on the inside-diameter side and the side opposite to the sealing face is cut in the tapered shape.

(3) The axial force in the direction opposite to the sealing face of the rotating-side seal ring can be kept at a constant magnitude, and the radial portion of the cup gasket can be securely pinched, contributing to the prevention of coming out of the cup gasket to the low-pressure fluid side, since the cup gasket is formed in the substantially L shape in cross section including the axial portion and the radial portion.

(4) The cup gasket can be prevented physically from coming out to the low-pressure fluid side since the thickness of the corner portion of the cup gasket is set larger than the gap between the inside-diameter side of the rotating-side seal ring and the inner cylindrical portion of the sleeve.

(5) The cup gasket can be further prevented from coming out to the low-pressure fluid side since the rotating-side seal ring is formed in the substantially hexagonal shape in cross section having the cut portion at which the corner portion on the inside-diameter side and the side opposite to the sealing face is cut in the inward-recessed shape and thus there is an advantage that the largest thickness of the corner portion of the cup gasket is easily increased.

(6) An outside mechanical seal equal in quality to an inside mechanical seal can be provided.

BRIEF DESCRIPTION OF THE DRAWINGS

Fig. 1 is a vertical cross-sectional view showing a principal part of a mechanical seal according to a first embodiment of the present invention;
Fig. 2 is a vertical cross-sectional view showing a principal part of a mechanical seal according to a second embodiment of the present invention;
Fig. 3 is a vertical cross-sectional view showing a principal part of a mechanical seal according to a third embodiment of the present invention;
Fig. 4 is a vertical cross-sectional view showing a principal part of a mechanical seal in Conventional Art 1; and
Fig. 5 is a vertical cross-sectional view showing a principal part of a mechanical seal in Conventional Art 2.

DESCRIPTION OF EMBODIMENTS

Hereinafter, with reference to the drawings, forms for implementing the present invention will be described illustratively based on embodiments. However, the dimensions, materials, shapes, relative arrangements, and others of components described in the embodiments are not intended to limit the present invention only to them unless otherwise described explicitly.

First Embodiment

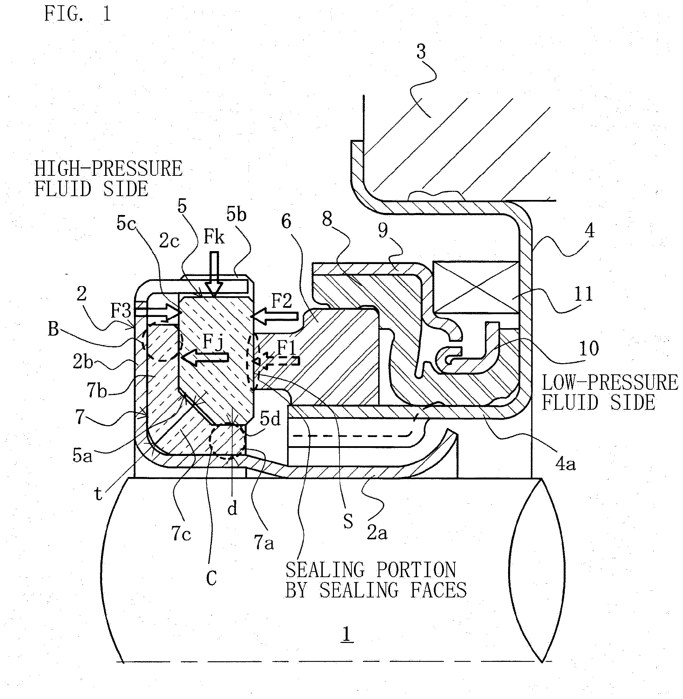

With reference to Fig. 1, a mechanical seal according to a first embodiment of the present invention will be described.

The present invention is applied to either inside mechanical seals or outside mechanical seals. In the first to third embodiments, inside mechanical seals in a form of sealing a fluid tending to leak from the outer periphery of sealing faces toward the inner periphery are shown. In Fig. 1, the left side is the high-pressure fluid side (sealed fluid side), and the right side is the low-pressure fluid side (atmosphere side).

In Fig. 1, the mechanical seal is an inside mechanical seal that includes a sleeve 2 fixed to a rotating shaft 1, a cartridge 4 fixed to a housing 3, a rotating-side seal ring 5 provided at the sleeve 2 via a cup gasket 7, and a stationary-side seal ring 6 provided at the cartridge 4 to slide, facing the rotating-side seal ring 5, in which a high-pressure fluid is present on the outside-diameter side of sealing faces S of the rotating-side seal ring 5 and the stationary-side seal ring 6.

The sleeve 2 includes an inner cylindrical portion 2a, a radial portion 2b, and an outer cylindrical portion 2c, forming a substantially C-shape in cross section, and is arranged so that its opening faces toward the cartridge 4, and is configured so that the rotating-side seal ring 5 is fitted inside.

The cartridge 4 also forms a substantially C-shape in cross section, and is arranged so that its opening faces toward the sleeve 2, and is configured so that the stationary-side seal ring 6 is fitted inside.

The stationary-side seal ring 6 fixed to the housing 3 of the pump is fitted in the cartridge 4 together with a bellows 8, a case 9, a driving band 10, and a coiled wave spring 11. The driving band 10 and the case 9 are fitted on the outer peripheral side of the bellows 8 to fix the stationary-side seal ring 6 to an inner cylindrical portion 4a of the cartridge 4. The bellows 8 fitted between the driving band 10 and the inner cylindrical portion 4a of the cartridge 4 has an appropriate interference to secure a sealing property and fixed power.

The rotating-side seal ring 5 is formed in a substantially pentagonal shape in cross section having a cut portion 5a at which a corner portion on the inside-diameter side and the side opposite to the sealing face S (sometimes referred to as "back-surface side" in the description) is cut in a tapered shape.

The substantially pentagonal shape in cross section means that the rotating-side seal ring 5 is not a pentagon in a strict sense since three corners other than two corners at both ends of the cut portion 5a may be subjected to chamfering or the like, but its basic shape is a pentagon when chamfered corners are ignored.

The rotating-side seal ring 5 is press-fixed into the sleeve 2 via the cup gasket 7 on the inside-diameter side and the back-surface side. There are various methods of stopping rotation of the rotating-side seal ring 5 on the sleeve 2. In this embodiment, notched portions 5b are provided at at least two places in outer peripheral portions of the rotating-side seal ring 5, and with claw-shaped portions provided at the outer cylindrical portion 2c of the sleeve 2 in such a manner as to face the notched portions 5b, rotation is stopped.

The cup gasket 7 is fitted over the inside-diameter side and the back-surface side of the rotating-side seal ring 5, and is formed in a substantially L shape in cross section including an axial portion 7a in contact with the inside-diameter side of the rotating-side seal ring 5 and the inner cylindrical portion 2a of the sleeve 2 and a radial portion 7b in contact with the back-surface side of the rotating-side seal ring 5 and the radial portion 2b of the sleeve 2. The axial portion 7a has a length enough to contact almost the entire surface of the inside-diameter side of the rotating-side seal ring 5.

It is preferable that the outermost diameter of the radial portion 7b and the pressure-receiving innermost diameter of the bellows 8 (the innermost diameter that receives the pressure of the high-pressure fluid at the bellows) are radially the same, or the outermost diameter of the radial portion 7b is provided closer to the high-pressure side than the pressure-receiving innermost diameter of the bellows. This is because when the pressure-receiving innermost diameter of the bellows and the outermost diameter of the radial portion 7b are radially the same, axially pressing forces acting on the back surface of the bellows and the back surface of the rotating ring due to the fluid pressure are balanced when viewed from the stationary-side seal ring, and the force of the coiled wave spring 11 is further applied to the back surface of the bellows, so that the stationary-side seal ring 6 is pressed against the rotating-side seal ring 5 to prevent the sealing faces from opening. When the radial portion 7b is provided closer to the high-pressure side than the pressure-receiving inside diameter of the bellows, a force acting on the back surface of the rotating ring due to the fluid pressure becomes weaker than when the radial portion 7b and the pressure-receiving inside diameter of the bellows are radially the same, further eliminating the possibility of opening of the sealing faces.

Here, a portion of a radial sealing portion B of the radial portion 7b of the cup gasket 7 in a position closer to the high-pressure fluid side may be made axially larger than an axial space between the rotating-side seal ring 5 and the radial portion 2b of the sleeve 2 to provide a structure that prevents leaks of the high-pressure fluid to the inside-diameter side. An axial sealing portion C of the rotating-side seal ring in a positon closer to the low-pressure fluid side of the axial portion 7a of the cup gasket 7 may be made radially larger than a radial space between the rotating-side seal ring 5 and the inner cylindrical portion 2a of the sleeve 2 to provide a structure that prevents the high-pressure fluid accidentally leaking from leaking to the low-pressure fluid side.

Further, an inner surface of a corner portion 7c of the cup gasket 7 facing the cut portion 5a of the rotating-side seal ring 5 is formed in a tapered shape along the cut portion 5a, and an outer surface of the corner portion 7c is formed substantially at a right angle (the corner is subjected to round processing) along an outer surface of the sleeve 2, and the thickness t of the corner portion 7c of the cup gasket 7 is set larger than a gap d between the inside-diameter side of the rotating-side seal ring 5 and the inner cylindrical portion 2a of the sleeve 2.

Here, with reference to Fig. 1, the pressure of the high-pressure fluid acting on the rotating-side seal ring 5 and the cup gasket 7 will be described.

The high-pressure fluid is sealed at the sealing faces S as shown by a broken line as a matter of course, and is also sealed at the radial sealing portion B of the radial portion 7b of the cup gasket 7 in the position closer to the high-pressure fluid side (secondary seal). Thus, the rotating-side seal ring 5 and the cup gasket 7 receive pressure as shown by arrows due to the high-pressure fluid. During that, a radial force Fk acting on the rotating-side seal ring 5 acts to contract the rotating-side seal ring 5 toward the inside-diameter side, but it is a force of a negligible level since the rigidity of the rotating-side seal ring 5 is high (conversely, when it is a force of a non-negligible level, it destroys the rotating-side seal ring 5), and the cup gasket 7 is not affected by a radial force from the rotating-side seal ring 5, and thus is pinched between the sleeve 2 and the rotating-side seal ring 5 by an axial force Fj from the rotating-side seal ring 5 in a direction opposite to the sealing face S and a reaction force from the sleeve 2. The cup gasket 7 is made of an elastic body. An elastic body is deformed by a force acting thereon, and resistance due to friction of a contact portion increases, depending on the amount of deformation. The amount of deformation of the cup gasket 7 depends on Fj, and thus resistance against the coming out of the cup gasket 7 depends on the axial force Fj.

The axial force Fj in the direction opposite to the sealing face S, acting on the rotating-side seal ring 5 is

$$Fj = F1 + F2 - F3$$

where F1 is a force received from the stationary-side seal ring 6, F2 is an axial force in the direction opposite to the sealing face S, received from the high-pressure fluid, and F3 is an axial force in a direction of the sealing face S, received from the high-pressure fluid.

Of them, F3 varies depending on the radial position of the radial sealing portion B. The radial position of the radial sealing portion B depends on the length of the radial portion 7b of the cup gasket 7. The longer the length (the more the portion of the back surface of the rotating-side seal ring 5 covered by the radial portion 7b increases), the smaller F3 can be made, and as a result, the larger Fj can be made.

The present invention has a feature in that by securely holding the radial portion 7b of the cup gasket 7, keeping the axial force Fj in the direction opposite to the sealing face of the rotating-side seal ring 5 at a constant magnitude, and setting the thickness t of the corner portion 7c of the cup gasket 7 larger than the gap d between the inside-diameter side of the rotating-side seal ring 5 and the inner cylindrical portion 2a of the sleeve 2, the cup gasket 7 is prevented physically from coming out when receiving a force from the high-pressure fluid in a coming-out direction toward the low-pressure fluid side.

Effects of this embodiment are as follows:

(1) The cup gasket can be prevented from coming out to the low-pressure fluid side without reducing the heat-dispersing property against sliding-generated heat compared to a case as shown in Fig. 4(b) where the cup gasket is provided on the high-pressure fluid side of the rotating-side seal ring 5, and at the same time, without enlarging the axial dimension compared to a case as shown in Fig. 4(c) where the thickness of the radial portion of the cup gasket is set larger.

(2) The rotating-side seal ring 5 can be reduced in weight without affecting the sealing performance since the rotating-side seal ring 5 is formed in the pentagonal shape in cross section having the cut portion 5a at which the corner portion on the inside-diameter side and the side opposite to the sealing face S is cut in the tapered shape.

(3) The axial force Fj in the direction opposite to the sealing face of the rotating-side seal ring 5 can be kept at a constant magnitude, and the radial portion 7b of the cup gasket 7 can be securely pinched, contributing to the prevention of coming out of the cup gasket to the low-pressure fluid side, since the cup gasket 7 is formed in the substantially L shape in cross section including the axial portion 7a and the radial portion 7b.

(4) The cup gasket can be prevented physically from coming out to the low-pressure fluid side since the thickness t of the corner portion 7c of the cup gasket 7 is set larger than the gap d between the inside-diameter side of the rotating-side seal ring 5 and the inner cylindrical portion 2a of the sleeve 2.

(5) Even when the axial portion 7a of the cup gasket 7 is accidentally broken, the sealing property can be maintained by the radial portion 7b since the cup gasket is prevented from coming out to the low-pressure fluid side.

Second Embodiment

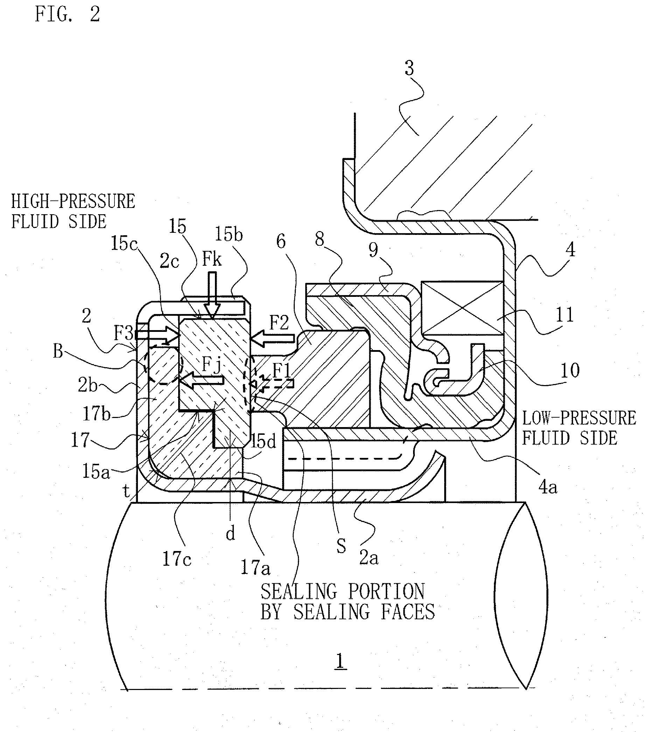

With reference to Fig. 2, a mechanical seal according to a second embodiment of the present invention will be described.

The second embodiment shown in Fig. 2 is different from the first embodiment shown in Fig. 1 in that it has a cut portion at which a corner portion of a rotating-side seal ring 15 on the inside-diameter side and the back-surface side is cut in an inward-recessed shape. The other configuration is identical to that in the first embodiment. The same members are denoted by the same reference numerals, and will not be redundantly described.

In Fig. 2, a rotating-side seal ring 15 is formed in a substantially hexagonal shape in cross section having a cut portion 15a at which a corner portion on the inside-diameter side and the back-surface side is cut in an inward-recessed shape.

In the case in Fig. 2, the cut portion 15a is recessed in a square, but is not limited to this, and may be a recess in an arc shape or a recess in a curved shape.

The substantially hexagonal shape in cross section means that when the cut portion 15a is a recess in an arc shape or the like, although the recess does not form a corner to be exact, the midpoint of the recess is regarded as a corner so that the corners count six, and also means that it is not a hexagon in a strict sense since three corners other than two corners at both ends of the cut portion 15a may be subjected to chamfering or the like, but the basic shape is a hexagon when chamfered corners are ignored.

The cup gasket 17 is fitted over the inside-diameter side and the back-surface side of the rotating-side seal ring 15, and is formed in a substantially L shape in cross section including an axial portion 17a in contact with the rotating-side seal ring 15 and an inner cylindrical portion 2a of a sleeve 2 and a radial portion 17b in contact with the rotating-side seal ring 15 and a radial portion 2b of the sleeve 2, and has a corner portion 17c facing the cut portion 15a of the rotating-side seal ring 15 formed in a shape along the cut portion 15a. The thickness t of the corner portion 17c of the cup gasket 17 is set larger than a gap d between the inside-diameter side of the rotating-side seal ring 15 and the inner cylindrical portion 2a of the sleeve 2.

This embodiment achieves effects similar to those of the first embodiment, and can further prevent the cup gasket from coming out to the low-pressure fluid side since it has an advantage that the largest thickness t of the corner portion 17c of the cup gasket 17 is easily increased.

Third Embodiment

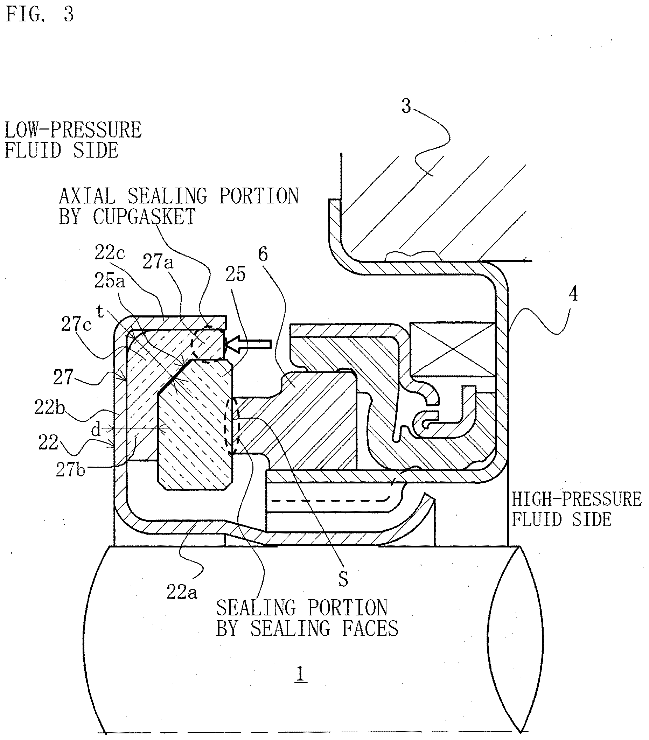

With reference to Fig. 3, a mechanical seal according to a third embodiment of the present invention will be described.

The third embodiment shown in Fig. 3 is different from the first embodiment in that it is an outside mechanical seal with a high-pressure sealed fluid present on the inside-diameter side of sealing faces of a rotating-side seal ring and a stationary-side seal ring. The other configuration is identical to that in the first embodiment. The same members are denoted by the same reference numerals, and will not be redundantly described.

The mechanical seal shown in Fig. 3 is an outside mechanical seal with a high-pressure sealed fluid present on the inside-diameter side of sealing faces S of a rotating-side seal ring 25 and a stationary-side seal ring 6.

The left side in Fig. 3 is the low-pressure fluid side (atmosphere side), and the right side is the high-pressure fluid side (sealed fluid side).

A sleeve 22 includes an inner cylindrical portion 22a, a radial portion 22b, and an outer cylindrical portion 22c, forming a substantially C-shape in cross section, and is arranged so that its opening faces toward a cartridge 4, and is configured so that the rotating-side seal ring 25 is fitted inside.

The rotating-side seal ring 25 is formed in a substantially pentagonal shape in cross section having a cut portion 25a at which a corner portion on the outside-diameter side and the back-surface side is cut in a tapered shape.

A cup gasket 27 is fitted over the outside-diameter side and the back-surface side of the rotating-side seal ring 25, and is formed in a substantially L shape in cross section including an axial portion 27a in contact with the outside-diameter side of the rotating-side seal ring 25 and the outer cylindrical portion 22c of the sleeve 22 and a radial portion 27b in contact with the back-surface side of the rotating-side seal ring 25 and the radial portion 22b of the sleeve 22, and has a corner portion 27c facing the cut portion 25a formed in a shape along the cut portion 25a.

The thickness t of the corner portion 27c of the cup gasket 27 is set larger than a gap d between the outside-diameter side of the rotating-side seal ring 25 and the outer cylindrical portion 22c of the sleeve 22.

Fig. 3 shows a case where the mechanical seal in the first embodiment is applied to an outside mechanical seal, which is not limiting. This embodiment is applicable to the mechanical seal in the second embodiment as a matter of course.

This embodiment achieves the following effects similar to those of the first embodiment:

(1) The cup gasket can be prevented from coming out to the low-pressure fluid side without reducing the heat-dispersing property against sliding-generated heat compared to a case as shown in Fig. 4(b) where the cup gasket is provided on the high-pressure fluid side of the rotating-side seal ring 25, and at the same time, without enlarging the axial dimension compared to a case as shown in Fig. 4(c) where the thickness of the radial portion of the cup gasket is set larger.

(2) The rotating-side seal ring 25 can be reduced in weight without affecting the sealing performance since the rotating-side seal ring 25 is formed in the pentagonal shape in cross section having the cut portion 25a at which the corner portion on the outside-diameter side and the side opposite to the sealing face S is cut in the tapered shape.

(3) The axial force Fj in a direction opposite to the sealing face of the rotating-side seal ring 25 can be kept at a constant magnitude, and the radial portion 7b of the cup gasket 27 can be securely pinched, contributing to the prevention of coming out of the cup gasket to the low-pressure fluid side, since the cup gasket 27 is formed in the substantially L shape in cross section including the axial portion 27a and the radial portion 7b.

(4) The cup gasket can be prevented physically from coming out to the low-pressure fluid side since the thickness t of the corner portion 27c of the cup gasket 27 is set larger than the gap d between the back-surface side of the rotating-side seal ring 25 and the radial portion 22b of the sleeve 22.

(5) Even when the axial portion 27a of the cup gasket 27 is accidentally broken, the sealing property can be maintained by the radial portion 27b since the cup gasket is prevented from coming out to the low-pressure fluid side.

The embodiments of the present invention has been described above with reference to the drawings, detailed configurations are not limited to the embodiments, the scope of the invention being limited by the appended claims only.

For example, although the embodiments have been described with the cases where the mechanical seals of the present invention are applied to pumps, they are not limited to them. For example, they are applicable to various industrial machines such as compressors and submersible motors.

Further, for example, although the rotating-side seal ring 5 has the cut portion 5a cut in the tapered shape in the embodiment, "the cut portion cut in the tapered shape" does not include corner chamfering that is performed in typical machining. Specifically, it means a case where it is cut larger than when it is chamfered.

Further, for example, although it has been described in the first and second embodiments that the sleeve 2 includes the inner cylindrical portion 2a, the radial portion 2b, and the outer cylindrical portion 2c, forming the substantially C shape in cross section, and stops rotation of the rotating-side seal ring with the claw-shaped portions provided at the outer cylindrical portion 2c, a case where the outer cylindrical portion 2c is not circumferentially continuous but consists of only claw-shaped portions is also included.

Reference Sign List

    1 rotating shaft
    2, 22 sleeve
    2a, 22a inner cylindrical portion
    2b, 22b radial portion
    2c, 22c outer cylindrical portion
    3 housing
    4 cartridge
    5, 15, 25 rotating-side seal ring
    6 stationary-side seal ring
    7, 17, 27 cup gasket
    7a, 17a, 27a axial portion
    7b, 17b, 27b radial portion
    8 bellows
    9 case
    10 driving band
    11 coiled wave spring

**Claims**

1. An inside mechanical seal comprising:

    a sleeve (2) adapted to be fixed to a rotating shaft (1);
    a cartridge (4) adapted to be fixed to a housing (3);
    a rotating-side seal ring (5) provided at the sleeve (2) via a cup gasket (7); and
    a stationary-side seal ring (6) provided at the cartridge (4), the stationary-side seal ring (6) sliding, facing the rotating-side seal ring (5), wherein, in use, a high-pressure fluid is present on an outside-diameter side of sealing faces (S) of the rotating-side seal ring (5) and the stationary-side seal ring (6), and
    the rotating-side seal ring (5) is formed in a substantially pentagonal shape in cross section having a cut portion (5a) at which a corner portion (7c) on an inside-diameter side and a back-surface side is cut in a tapered shape, **characterized in that**
    the cup gasket (7) is fitted over the inside-diameter side and the back-surface side of the rotating-side seal ring (5), and is formed in a substantially L shape in cross section including an axial portion (7a) in contact with the inside-diameter side of the rotating-side seal ring (5) and an inner cylindrical portion (2a) of the sleeve (2) and a radial portion (7b) in contact with the back-surface side of the rotating-side seal ring (5) and a radial portion (2b) of the sleeve (2), and has the corner portion (7c) facing the cut portion (5a) formed in a shape along the cut portion (5a), and **in that**
    the corner portion (7c) of the cup gasket (7) has a thickness t set larger than a gap d between the inside-diameter side of the rotating-side seal ring (5) and the inner cylindrical portion (2a) of the sleeve (2).

2. An inside mechanical seal comprising:

    a sleeve (2) adapted to be fixed to a rotating shaft (1);
    a cartridge (4) adapted to be fixed to a housing (3);
    a rotating-side seal ring (15) provided at the sleeve (2) via a cup gasket (17); and
    a stationary-side seal ring (6) provided at the cartridge (4), the stationary-side seal ring (6) sliding, facing the rotating-side seal ring (15), wherein, in use, a high-pressure fluid is present on an outside-diameter side of sealing faces (S) of the rotating-side seal ring (15) and the stationary-side seal ring (6), and
    the rotating-side seal ring (15) is formed in a substantially hexagonal shape in cross section having a cut portion (15a) at which a corner portion (17c) on an inside-diameter side and a back-surface side is cut in an inward-recessed shape, **characterized in that**
    the cup gasket (17) is fitted over the inside-diameter side and the back-surface side of the rotating-side seal ring (15), and is formed in a substantially L shape in cross section including an axial portion (17a) in contact with the inside-diameter side of the rotating-side seal ring (15) and an inner cylindrical portion (2a) of the sleeve (2) and a radial portion (17b) in contact with the back-surface side of the rotating-side seal ring (15) and a radial portion (2b) of the sleeve (2), and has the corner portion (17c) facing the cut portion (15a) formed in a shape along the cut portion (15a), and **in that**
the corner portion (17c) of the cup gasket (17) has a thickness t set larger than a gap d between the inside-diameter side of the rotating-side seal ring (15) and the inner cylindrical portion (2a) of the sleeve (2).

3. An outside mechanical seal comprising:

a sleeve (22) adapted to be fixed to a rotating shaft (1);
a cartridge (4) adapted to be fixed to a housing (3);
a rotating-side seal ring (25) provided at the sleeve (22) via a cup gasket (27); and
a stationary-side seal ring (6) provided at the cartridge (4), the stationary-side seal ring (6) sliding, facing the rotating-side seal ring (25), wherein, in use, a high-pressure sealed fluid is present on an inside-diameter side of sealing faces (S) of the rotating-side seal ring (25) and the stationary-side seal ring (6), and
the rotating-side seal ring (25) is formed in a substantially pentagonal shape in cross section having a cut portion (25a) at which a corner portion (27c) on an outside-diameter side and a back-surface side is cut in a tapered shape, or in a substantially hexagonal shape in cross section having a cut portion (15a) at which the corner portion (17c) is cut in an inward-recessed shape, **characterized in that**
the cup gasket (27) is fitted over the back-surface side of the rotating-side seal ring (25) and an outer cylindrical portion (22c) of the sleeve (22), and is formed in a substantially L shape in cross section including an axial portion (27a) in contact with the outside-diameter side of the rotating-side seal ring (25) and the outer cylindrical portion (22c) of the sleeve (22) and a radial portion (27b) in contact with the back-surface side of the rotating-side seal ring (25) and a radial portion (22b) of the sleeve (22), and has the corner portion (27c) facing the cut portion (25a) formed in a shape along the cut portion (25a), and **in that**
the corner portion (27c) of the cup gasket (27) has a thickness t set larger than a gap d between the back-surface side of the rotating-side seal ring (25) and the radial portion (22b) of the sleeve (22).

**Patentansprüche**

1. Innengleitringdichtung, mit:

einer Hülse (2), die geeignet ist, an einer Drehwelle (1) fixiert zu werden;
einem Einsatz (4), der geeignet ist, an einem Gehäuse (3) fixiert zu werden;
einem drehseitigen Dichtungsring (5), der an der Hülse (2) mittels einer Napfdichtung (7) vorgesehen ist; und
einem ruheseitigen Dichtungsring (6), der an dem Einsatz (4) vorgesehen ist, wobei der ruheseitige Dichtungsring (6) gleitet, wobei er dem drehseitigen Dichtungsring (5) gegenüberliegt, wobei, bei Verwendung, ein Hochdruckfluid auf einer Außendurchmesserseite von Dichtungsflächen (S) des drehseitigen Dichtungsrings (5) und des ruheseitigen Dichtungsrings (6) vorhanden ist, und
der drehseitige Dichtungsring (5) im Wesentlichen in einer fünfeckigen Form in einem Querschnitt mit einem Ausnehmungsabschnitt (5a) ausgebildet ist, bei dem ein Eckabschnitt (7c) auf einer Innendurchmesserseite und einer Rückflächenseite in einer Kegelform ausgenommen ist, **dadurch gekennzeichnet, dass**
die Napfdichtung (7) über die Innendurchmesserseite und die Rückflächenseite des drehseitigen Dichtungsrings (5) eingesetzt ist und im Wesentlichen in einer L-Form in einem Querschnitt ausgebildet ist, wobei sie einen Axialabschnitt (7a), der mit der Innendurchmesserseite des drehseitigen Dichtungsrings (5) und einem inneren Zylinderabschnitt (2a) der Hülse (2) in Kontakt ist, und einen Radialabschnitt (7b) umfasst, der mit der Rückflächenseite des drehseitigen Dichtungsrings (5) und einem Radialabschnitt (2b) der Hülse (2) in Kontakt ist, und wobei ihr Eckabschnitt (7c), der dem Ausnehmungsabschnitt (5a) gegenüberliegt, in einer Form entlang des Ausnehmungsabschnitts (5a) ausgebildet ist, und dass
der Eckabschnitt (7c) der Napfdichtung (7) eine Dicke t hat, die größer festgelegt ist als ein Spalt d zwischen der Innendurchmesserseite des drehseitigen Dichtungsrings (5) und dem inneren Zylinderabschnitt (2a) der Hülse (2).

2. Innengleitringdichtung, mit:

einer Hülse (2), die geeignet ist, an einer Drehwelle (1) fixiert zu werden;
einem Einsatz (4), der geeignet ist, an einem Gehäuse (3) fixiert zu werden;
einem drehseitigen Dichtungsring (15), der an der Hülse (2) mittels einer Napfdichtung (17) vorgesehen ist; und

einem ruheseitigen Dichtungsring (6), der an dem Einsatz (4) vorgesehen ist, wobei der ruheseitige Dichtungsring (6) gleitet, wobei er dem gegenseitigen Dichtungsring (15) gegenüberliegt,

wobei, bei Verwendung, ein Hochdruckfluid auf einer Außendurchmesserseite von Dichtungsflächen (S) des drehseitigen Dichtungsrings (15) und des ruheseitigen Dichtungsrings (6) vorhanden ist, und

der drehseitige Dichtungsring (15) im Wesentlichen in einer fünfeckigen Form in einem Querschnitt mit einem Ausnehmungsabschnitt (15a) ausgebildet ist, bei dem ein Eckabschnitt (17c) auf einer Innendurchmesserseite und einer Rückflächenseite in einer nach innen vertieften Form ausgenommen ist, **dadurch gekennzeichnet, dass**

die Napfdichtung (17) über die Innendurchmesserseite und die Rückflächenseite des drehseitigen Dichtungsrings (15) eingesetzt ist, und im Wesentlichen in einer L-Form in einem Querschnitt ausgebildet ist, wobei sie einen Axialabschnitt (17a), der mit der Innendurchmesserseite des drehseitigen Dichtungsrings (15) und einem inneren Zylinderabschnitt (2a) der Hülse (2) in Kontakt ist, und einen Radialabschnitt (17b) umfasst, der mit der Rückflächenseite des drehseitigen Dichtungsrings (15) und einem Radialabschnitt (2b) der Hülse (2) in Kontakt ist, und wobei ihr Eckabschnitt, der (17c) dem Ausnehmungsabschnitt (15a) gegenüberliegt, in einer Form entlang des Ausnehmungsabschnitts (15a) ausgebildet ist, und dass

der Eckabschnitt (17c) der Napfdichtung (17) eine Dicke t hat, die größer festgelegt ist als ein Spalt d zwischen der Innendurchmesserseite des drehseitigen Dichtungsrings (15) und dem inneren Zylinderabschnitt (2a) der Hülse (2).

3. Außengleitringdichtung, mit:

einer Hülse (22), die geeignet ist, an einer Drehwelle (1) fixiert zu werden;

einem Einsatz (4), der geeignet ist, an einem Gehäuse (3) fixiert zu werden;

einem drehseitigen Dichtungsring (25), der an der Hülse (22) mittels einer Napfdichtung (27) vorgesehen ist; und

einem ruheseitigen Dichtungsring (6), der an dem Einsatz (4) vorgesehen ist, wobei der ruheseitige Dichtungsring (6) gleitet, wobei er dem drehseitigen Dichtungsring (25) gegenüberliegt, wobei, bei Verwendung, ein abgedichtetes Hochdruckfluid auf einer Innendurchmesserseite von Dichtungsflächen (S) des drehseitigen Dichtungsrings (25) und des ruheseitigen Dichtungsrings (6) vorhanden ist, und

der drehseitige Dichtungsring (25) im Wesentlichen in einer fünfeckigen Form in einem Querschnitt mit einem Ausnehmungsabschnitt (25a), bei dem ein Eckabschnitt (27c) auf einer Außendurchmesser Seite und einer Rückflächenseite in einer Kegelform ausgenommen ist, oder im Wesentlichen in einer sechseckigen Form in einem Querschnitt mit einem Ausnehmungsabschnitt (15a) ausgebildet ist, bei dem der Eckabschnitt (17c) in einer nach innen vertieften Form ausgenommen ist, **dadurch gekennzeichnet, dass**

die Napfdichtung (27) über die Rückflächenseite des drehseitigen Dichtungsrings (25) und einen äußeren Zylinderabschnitt (22c) der Hülse (22) eingesetzt ist, und im Wesentlichen in einer L-Form in einem Querschnitt ausgebildet ist, wobei sie einen Axialabschnitt (27a), der mit der Außendurchmesserseite des drehseitigen Dichtungsrings (25) und dem äußeren Zylinderabschnitt (22c) der Hülse (22) in Kontakt ist, und einen Radialabschnitt (27b) umfasst, der mit der Rückflächenseite des drehseitigen Dichtungsrings (25) und einem Radialabschnitt (22b) der Hülse (22) in Kontakt ist, und wobei ihr Eckabschnitt (27c), der dem Ausnehmungsabschnitt (25a) gegenüberliegt, in einer Form entlang des Ausnehmungsabschnitts (25a) ausgebildet ist, und dass

der Eckabschnitt (27c) der Napfdichtung (27) eine Dicke t hat, die größer festgelegt ist als ein Spalt d zwischen der Rückflächenseite des drehseitigen Dichtungsrings (25) und dem Radialabschnitt (22b) der Hülse (22).

**Revendications**

1. Joint d'étanchéité mécanique intérieur comprenant :

un manchon (2) adapté pour être fixé à un arbre rotatif (1) ;
une cartouche (4) adaptée pour être fixée à un boîtier (3) ;
une bague étanche côté rotatif (5) prévue au niveau du manchon (2) via un joint de clapet (7) ; et
une bague étanche côté stationnaire (6) prévue au niveau de la cartouche (4), la bague étanche côté stationnaire (6) coulissant, faisant face à la bague étanche côté rotatif (5),
dans lequel, en utilisation, un fluide haute pression est présent sur un côté de diamètre extérieur de faces étanches (S) de la bague étanche côté rotatif (5) et de la bague étanche côté stationnaire (6), et
la bague étanche côté rotatif (5) est formée dans une forme sensiblement pentagonale en section transversale présentant une portion coupée (5a) au niveau de laquelle une portion de coin (7c) sur un côté de diamètre intérieur et un côté de surface arrière est coupée dans une forme effilée, **caractérisé en ce que**

le joint de clapet (7) est ajusté sur le côté de diamètre intérieur et le côté de surface arrière de la bague étanche côté rotatif (5), et est formé dans une forme sensiblement en L en section transversale incluant une portion axiale (7a) en contact avec le côté de diamètre intérieur de la bague étanche côté rotatif (5) et une portion cylindrique intérieure (2a) du manchon (2) et une portion radiale (7b) en contact avec le côté de surface arrière de la bague étanche côté rotatif (5) et une portion radiale (2b) du manchon (2), et présente la portion de coin (7c) faisant face à la portion coupée (5a) formée dans une forme le long de la portion coupée (5a), et **en ce que** la portion de coin (7c) du joint de clapet (7) présente une épaisseur t réglée pour être plus grande qu'un espace d entre le côté de diamètre intérieur de la bague étanche côté rotatif (5) et la portion cylindrique intérieure (2a) du manchon (2).

**2.** Joint d'étanchéité mécanique intérieur comprenant :

un manchon (2) adapté pour être fixé à un arbre rotatif (1) ;
une cartouche (4) adaptée pour être fixée à un boîtier (3) ;
une bague étanche côté rotatif (15) prévue au niveau du manchon (2) via un joint de clapet (17) ; et
une bague étanche côté stationnaire (6) prévue au niveau de la cartouche (4), la bague étanche côté stationnaire (6) coulissant, faisant face à la bague étanche côté rotatif (15),
dans lequel, en utilisation, un fluide haute pression est présent sur un côté de diamètre extérieur de faces étanches (S) de la bague étanche côté rotatif (15) et de la bague étanche côté stationnaire (6), et
la bague étanche côté rotatif (15) est formée dans une forme sensiblement hexagonale en section transversale présentant une portion coupée (15a) au niveau de laquelle une portion de coin (17c) sur un côté de diamètre intérieur et un côté de surface arrière est coupée dans une forme évidée vers l'intérieur, **caractérisé en ce que**

le joint de clapet (17) est ajusté sur le côté de diamètre intérieur et le côté de surface arrière de la bague étanche côté rotatif (15), et est formé dans une forme sensiblement en L en section transversale incluant une portion axiale (17a) en contact avec le côté de diamètre intérieur de la bague étanche côté rotatif (15) et une portion cylindrique intérieure (2a) du manchon (2) et une portion radiale (17b) en contact avec le côté de surface arrière de la bague étanche côté rotatif (15) et une portion radiale (2b) du manchon (2), et présente la portion de coin (17c) faisant face à la portion coupée (15a) formée dans une forme le long de la portion coupée (15a), et **en ce que** la portion de coin (17c) du joint de clapet (17) présente une épaisseur t réglée pour être plus grande qu'un espace d entre le côté de diamètre intérieur de la bague étanche côté rotatif (15) et la portion cylindrique intérieure (2a) du manchon (2).

**3.** Joint d'étanchéité mécanique extérieur comprenant :

un manchon (22) adapté pour être fixé à un arbre rotatif (1) ;
une cartouche (4) adaptée pour être fixée à un boîtier (3) ;
une bague étanche côté rotatif (25) prévue au niveau du manchon (22) via un joint de clapet (27) ; et
une bague étanche côté stationnaire (6) prévue au niveau de la cartouche (4), la bague étanche côté stationnaire (6) coulissant, faisant face à la bague étanche côté rotatif (25),
dans lequel, en utilisation, un fluide étanche haute pression est présent sur un côté de diamètre intérieur de faces étanches (S) de la bague étanche côté rotatif (25) et de la bague étanche côté stationnaire (6), et
la bague étanche côté rotatif (25) est formée dans une forme sensiblement pentagonale en section transversale présentant une portion coupée (25a) au niveau de laquelle une portion de coin (27c) sur un côté de diamètre extérieur et un côté de surface arrière est coupée dans une forme effilée, ou dans une forme sensiblement hexagonale en section transversale présentant une portion coupée (15a) au niveau de laquelle la portion de coin (17c) est coupée dans une forme évidée vers l'intérieur, **caractérisé en ce que**

le joint de clapet (27) est ajusté sur le côté de surface arrière de la bague étanche côté rotatif (25) et une portion cylindrique extérieure (22c) du manchon (22), et est formé dans une forme sensiblement en L en section transversale incluant une portion axiale (27a) en contact avec le côté de diamètre extérieur de la bague étanche côté rotatif (25) et la portion cylindrique extérieure (22c) du manchon (22) et une portion radiale (27b) en contact avec le côté de surface arrière de la bague étanche côté rotatif (25) et une portion radiale (22b) du manchon (22), et présente la portion de coin (27c) faisant face à la portion coupée (25a) formée dans une forme le long de la portion coupée (25a), et **en ce que** la portion de coin (27c) du joint de clapet (27) présente une épaisseur t réglée pour être plus grande qu'un espace d entre le côté de surface arrière de la bague étanche côté rotatif (25) et la portion radiale (22b) du manchon (22).

FIG. 1

HIGH-PRESSURE
FLUID SIDE

LOW-PRESSURE
FLUID SIDE

SEALING PORTION
BY SEALING FACES

FIG. 2

HIGH-PRESSURE
FLUID SIDE

LOW-PRESSURE
FLUID SIDE

SEALING PORTION
BY SEALING FACES

FIG. 3

LOW-PRESSURE
FLUID SIDE

AXIAL SEALING PORTION
BY CUPGASKET

3

22c  27a    25   6
25a
27c  t
27
22b
22
27b
4

22a

SEALING PORTION
BY SEALING FACES

S

HIGH-PRESSURE
FLUID SIDE

d

1

FIG. 4

HIGH-PRESSURE
FLUID SIDE

54

53   55   57   56

51                     58

S   SEALING PORTION
BY SEALING FACES
**50**

52

LOW-PRESSRE
FLUID SIDE

SEALING PORTION
BY CUP GASKET

(a)

HIGH-PRESSURE
FLUID SIDE   52   53

A1

51

S

LOW-
PRESSRE
FLUID
SIDE

(b)

52   53

HIGH-PRESSURE
FLUIDE SIDE

52a

51

LOW-PRESSURE
FLUID SIDE

t   S

(c)

FIG. 5

HIGH-PRESSURE
FLUID SIDE

54

57

51  53

55

56

58

A

S

59 SEALING PORTION
BY SEALING FACES

LOW-PRESSRE
FLUID SIDE

50

**EP 3 199 846 B1**

**REFERENCES CITED IN THE DESCRIPTION**

**Patent documents cited in the description**

- JP 2000074226 A
- JP 2012184843 A
- DE 102011005108 A1
- JP H0611047 A
- US 4779876 A